# EUROPÄISCHE PATENTSCHRIFT

(11) **EP 2 592 968 B1**
(45) Veröffentlichungstag und Bekanntmachung des Hinweises auf die Patenterteilung: **28.10.2015**
(21) Anmeldenummer: 11730313.1
(22) Anmeldetag: 08.07.2011
(51) Int. Cl.: A47B 88/04, F24C 15/16

(54) **VERBINDUNGSEINRICHTUNG UND SEITENGITTER ZUR FIXIERUNG EINER AUSZUGSFÜHRUNG AN DEM SEITENGITTER**
CONNECTING DEVICE AND SIDE GRATE FOR FIXING A PULL-OUT GUIDE TO SAID SIDE GRATE
DISPOSITIF DE LIAISON ET GRILLE LATÉRALE DESTINÉ À FIXER UN GUIDAGE À COULISSE SUR LA GRILLE LATÉRALE

(30) Priorität: 15.07.2010 DE 102010036422; 26.04.2011 DE 102011002257
(43) Veröffentlichungstag der Anmeldung: 22.05.2013
(73) Patentinhaber: Paul Hettich GmbH & Co. KG, 32278 Kirchlengern (DE)
(72) Erfinder: REHAGE, Daniel, 33611 Bielefeld (DE)
(74) Vertreter: Dantz, Jan Henning
(86) Internationale Anmeldenummer: PCT/EP2011/061595
(87) Internationale Veröffentlichungsnummer: WO 2012/007372

(56) Entgegenhaltungen:
- US-A1- 2001 044 992
- US-A1- 2004 108 427
- US-B1- 6 422 399

## Beschreibung

Die vorliegende Erfindung betrifft eine Verbindungseinrichtung und ein Seitengitter zur Fixierung einer Auszugsführung an dem Seitengitter, insbesondere für Backöfen, mit einem Halter, der mindestens einen Haken zum Einhängen an einer horizontalen Strebe des Seitengitters aufweist, und ein Federelement, mittels dem der Halter an dem Seitengitter verrastbar ist.

Die DE 20 2005 020 458 offenbart ein Schnellbefestigungselement zur Befestigung einer Führungsschiene an einer Strebe eines gitterartigen Seitenteils, wobei das Schnellbefestigungselement einen klammerartigen Halteabschnitt aufweist und in horizontale Richtung auf die Strebe aufschiebbar ist. Zur Fixierung des Schnellbefestigungselementes ist eine integral ausgebildete Blattfeder vorgesehen. Das Verrasten des Schnellbefestigungselementes führt zwar zu einer einfachen Montage, allerdings besteht das Problem, dass integral ausgebildete Blattfedern bei stabiler Ausgestaltung oft in einem kritischen Spannungsbereich arbeiten. Aufgrund der sehr kleinen Federwege ist eine hohe Federkraft notwendig, um das Schnellbefestigungselement sicher zu verrasten.

Die US 6,422,399 offenbart ein Regal, bei dem zwischen zwei vertikalen Streben eine Auszugsführung eingehängt werden kann. Hierfür sind an einer stationären Schiene der Auszugsführung Verbindungseinrichtungen vorgesehen, die ein biegbares Federelement in Form einer Blattfeder aufweisen. Dadurch kann die Auszugsführung an Aussparungen der vertikalen Streben eingehängt und verrastet werden.

Es ist daher Aufgabe der vorliegenden Erfindung, eine Verbindungseinrichtung und ein Seitengitter zur Fixierung einer Auszugsführung an dem Seitengitter zu schaffen, die leicht zu montieren ist und bei der eine hohe Materialbelastung des Federelementes vermieden werden kann.

Diese Aufgabe wird mit einer Verbindungseinrichtung und einem Seitengitter mit den Merkmalen des Anspruches 1 gelöst.

Erfindungsgemäß ist das Federelement der Verbindungseinrichtung als separates Bauteil ausgebildet, also getrennt von dem Halter, und umfasst einen biegbaren Federschenkel zum Verrasten des Halters. Der biegbare Federschenkel kann einen größeren Federweg aufweisen, so dass geringere Kräfte beim Verrasten des Halters an der Strebe notwendig sind. Zudem kann das Federelement in eine Richtung biegbar ausgebildet sein, in der der Halter eine hohe Steifigkeit besitzt, so dass eine optimierte Gestaltung zur sicheren Fixierung an der Strebe möglich ist.

Vorzugsweise ist das Federelement an dem Halter in der verrasteten Position fixiert. Das Federelement kann dabei klemmend an dem Halter festgelegt sein, aber auch eine Festlegung über Befestigungsmittel ist möglich.

Gemäß einer Ausgestaltung der Erfindung ist der Halter als Winkel ausgebildet, der an einer Seite den Haken und an einem abgewinkelten Abschnitt eine Auflage für die Auszugsführung ausbildet. Dadurch kann an dem abgewinkelten Abschnitt auf einfache Weise die Auszugsführung festgelegt werden. Für eine stabile Befestigung in horizontaler Richtung kann an dem abgewinkelten Abschnitt eine Aussparung ausgebildet sein, in die ein vertikaler Pfosten des Seitengitters einfügbar ist. Dadurch werden die beim Verfahren der Auszugsführung auftretenden horizontalen Kräfte direkt auf das Seitengitter übertragen.

Für einen kompakten Aufbau kann das Federelement als Blattfeder ausgebildet sein. Der biegbare Federschenkel kann für geringe Federkräfte eine Länge von mindestens 2 cm aufweisen.

Das Federelement ist erfindungsgemäß entweder im Wesentlichen L-förmig ausgebildet, wobei ein Schenkel den Federschenkel bildet und der andere Schenkel an dem abgewinkelten Abschnitt des Halters abgestützt ist oder es weist einen aus dem Blech bogenförmig, insbesondere spiralförmig gestalteten Federschenkel auf. Dadurch ist ein besonders flacher Aufbau des Federelementes möglich, das im Wesentlichen aus einem gebogenen Metallblech hergestellt sein kann, wobei an dem Federschenkel zusätzlich ein gebogener Anschlag zur Begrenzung des Federweges des Federschenkels vorgesehen sein kann beziehungsweise es kann bei sehr kompakter Bauweise eine leichte Auslenkung quer zur Blechebene des Federschenkels über einen großen Federweg erreicht werden.

Ziel dieser Federanordnung ist es, bezogen auf die Grundfläche der Flachformfeder die maximale, gestreckte Länge bezogen auf den Zuschnitt zu erhalten.

Die Verbindungseinrichtung umfasst vorzugsweise einen zweiten Halter, der beispielsweise am gegenüberliegenden Ende der Auszugsführung montiert sein kann und einen Haken zum Einhängen an einer horizontalen Strebe des Seitengitters aufweist. Der zweite Halter umfasst für eine sichere Fixierung an dem Seitengitter einen leistenförmigen Abschnitt, an dem eine Nut zum Einfügen eines vertikalen Pfostens des Seitengitters ausgebildet ist, so dass horizontale Kräfte auf das Seitengitter übertragen werden können. Für eine stabile Befestigung der Auszugsführung kann an dem zweiten Halter ein horizontaler Ausleger vorgesehen sein, an dem eine Schiene der Auszugsführung festgelegt ist, beispielsweise durch Einstecken des Auslegers in die Schiene.

Die Erfindung wird nachfolgend anhand eines Ausführungsbeispiels mit Bezug auf die beigefügten Zeichnungen näher erläutert. Es zeigen:

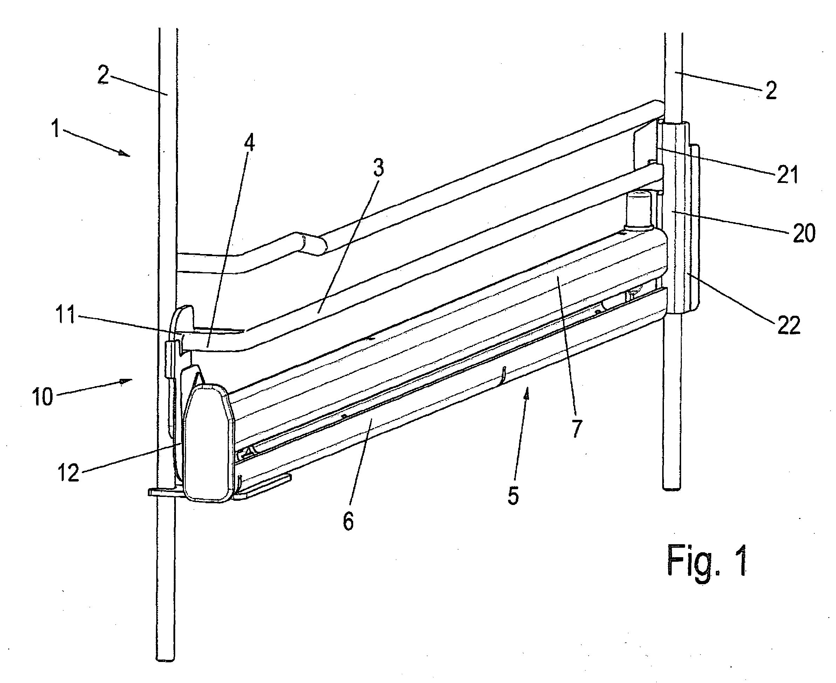

- Figur 1: eine perspektivische Ansicht der Verbindungseinrichtung im montierten Zustand;
- Figur 2: eine perspektivische Ansicht der Verbindungseinrichtung der Figur 1 bei der Montage;
- Figur 3: eine perspektivische Explosionsdarstellung der Verbindungseinrichtung ohne Seitengitter,
- Figur 4: eine perspektivische Ansicht des ersten Halters und des Federelementes,
- Figur 5A bis 5C: mehrere Ansichten eines weiteren Ausführungsbeispieles eines ersten Halters mit einem modifizierten Federelement,
- Figuren 6A bis 6C: mehrere Ansichten eines weiteren Ausführungsbeispieles eines ersten Halters mit einem modifizierten Federelement,
- Figuren 7A bis 7G: mehrere Ansichten eines weiteren Ausführungsbeispieles eines ersten Halters mit einem modifizierten Federelement,
- Figur 8: eine schematische Darstellung der Verformung der Flachformfeder der Fig. 7 bei Krafteinwirkung, und
- Figur 9: ein Beispiel für einen modifizierten Flachformfederzuschnitt.

Eine Verbindungseinrichtung dient zur Fixierung einer Auszugsführung 5 an einem Seitengitter 1, wobei das Seitengitter 1 zwei voneinander beabstandete vertikale Pfosten 2 umfasst, an denen eine Vielzahl horizontaler Streben 3 festgelegt sind. Jede horizontale Strebe 3 umfasst an einer Seite einen abgewinkelten Endabschnitt 4, der an dem vertikalen Pfosten 2 festgelegt ist. Auf der gegenüberliegenden Seite ist jede horizontale Strebe 3 mit einem linearen Abschnitt endseitig an einem vertikalen Pfosten 2 festgelegt.

Das Seitengitter 1 wird beispielsweise an einer Seitenwand eines Backofens fixiert und dient zur Führung von Gargutträgern, wobei zumindest an einem Teil der horizontalen Streben 3 eine Auszugsführung 5 mit einer stationären Führungsschiene 6 und einer verfahrbaren Laufschiene 7 festgelegt ist. Zwischen der Führungsschiene 6 und der Laufschiene 7 kann mindestens eine auszugsverlängernde Mittelschiene angeordnet sein.

An dem vorderen Pfosten 2 ist ein erster Halter 10 festgelegt, der einen Haken 11 aufweist, der an dem abgewinkelten Endabschnitt 4 einer horizontalen Strebe 3 eingehängt ist. Um den Haken 11 in der eingehängten Position zu sichern, ist ein Federelement 12 vorgesehen.

Ferner umfasst die Verbindungseinrichtung einen zweiten Halter 20, der an dem hinteren Pfosten 2 des Seitengitters 1 festgelegt ist. Der zweite Halter 20 umfasst einen Haken 21, der an einer horizontalen Strebe 3 eingehängt ist. Ferner umfasst der zweite Halter 20 einen leistenförmigen Abschnitt 22, der den vertikalen Pfosten 2 U-förmig einfasst.

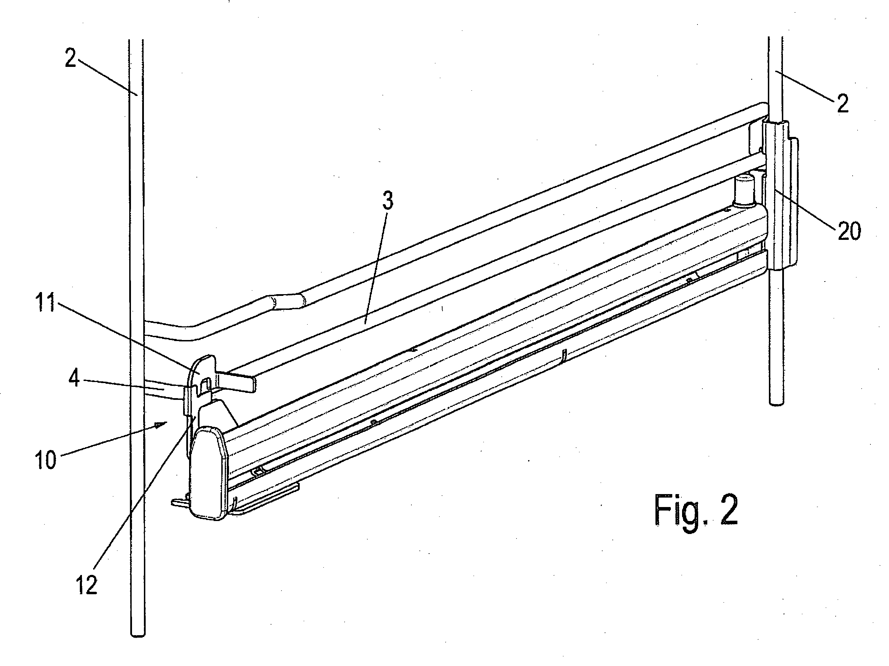

In Figur 2 ist die Verbindungseinrichtung bei der Montage gezeigt, wobei der zweite Halter 20 schon an dem vertikalen Pfosten 2 und der horizontalen Strebe 3 fixiert ist und der erste Halter 10 noch nicht an dem abgewinkelten Endabschnitt 4 fixiert ist. Für die Montage wird das Federelement 12 von dem Haken 11 weggebogen, damit der abgewinkelte Endabschnitt 4 in den Haken 11 eingefügt werden kann. Anschließend biegt sich das Federelement 12 zurück und sichert den ersten Halter.

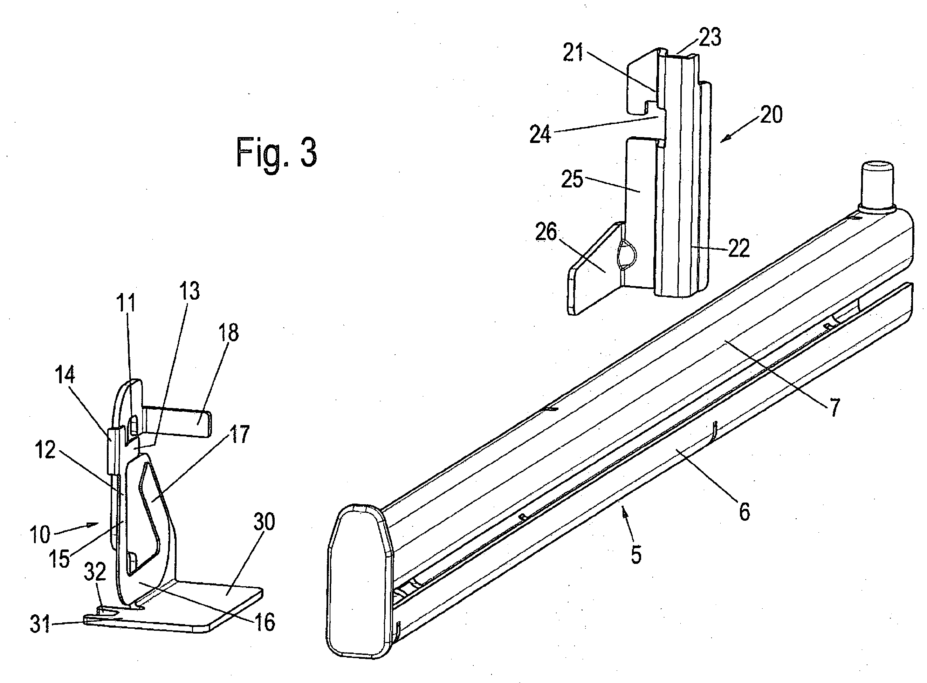

In Figur 3 ist der erste Halter 10 sowie der zweite Halter 20 mit noch nicht daran angeordneter Auszugsführung 5 dargestellt. Der erste Halter 10 ist im Wesentlichen winkelförmig ausgestaltet, wobei an einer Seite der Haken 11 und an der anderen Seite ein abgewinkelter Abschnitt 30 ausgebildet ist, auf dem die Auszugsführung abgestützt ist. Die Auszugsführung 5 kann mit einer Schiene an dem abgewinkelten Abschnitt 30 fixiert sein, beispielsweise durch Verschweißen. Benachbart zu dem Haken 11 ist ein winklig hervorstehender Anschlag 18 ausgebildet, der parallel zu dem abgewinkelten Endabschnitt 4 ausgerichtet ist und an der horizontalen Strebe 3 anliegt Dadurch kann der Halter 10 gegen ein Abziehen quer zur Auszugsrichtung gesichert werden.

An dem abgewinkelten Abschnitt 30 ist rückseitig eine horizontal ausgerichtete Lasche 31 ausgebildet, an der eine Aussparung 32 zum Einfügen des Pfostens 2 vorgesehen ist. Dadurch kann der Halter 12 gegen ein Verschieben in Auszugsrichtung gesichert werden.

Das Federelement 12 umfasst einen biegbaren Federschenkel 15, an dem ein seitlicher Vorsprung 13 ausgebildet ist, um eine Öffnung 19 an dem Hakten 11 zu verschließen. Ferner ist an dem Federschenkel 15 ein abgewinkelter Anschlag 14 ausgebildet, um die Bewegung des Federschenkels 15 zu begrenzen. Weiterhin dient der Anschlag 14 als Handhabe bei der Demontage der Auszugsführung 5. Das Federelement 12 umfasst ferner einen Bodenabschnitt 16, der benachbart zu dem abgewinkelten Abschnitt 30 an dem Halter 10 angeordnet ist, so dass verhindert wird, dass das Federelement 12 nach unten bewegt werden kann. Ferner ist an dem Bodenabschnitt 16 ein Ausleger 17 angeformt.

Der zweite Halter 20 umfasst einen leistenförmigen Abschnitt 22, an dem eine U-förmige Nut 23 zur Aufnahme des vertikalen Pfostens 2 ausgebildet ist. An einem seitlichen Schenkel des leistenförmigen Abschnittes 22 ist ein seitlich hervorstehender Haken 21 ausgebildet, der eine Öffnung 24 zum Einfügen der horizontalen Strebe 3 aufweist. Ferner ist an einem Schenkel des leistenförmigen Abschnittes 22 eine seitlich hervorstehende Leiste 25 ausgebildet, an der ein winklig hervorstehender Ausleger 26 angeordnet ist. Der Ausleger 26 erstreckt sich parallel zur Längsrichtung der Auszugsführung 5 und kann in eine Aufnahme an einer Führungsschiene 6 eingefügt werden. An dem Ausleger 26 kann die Führungsschiene 6 durch geeignete Befestigungsmittel fixiert sein.

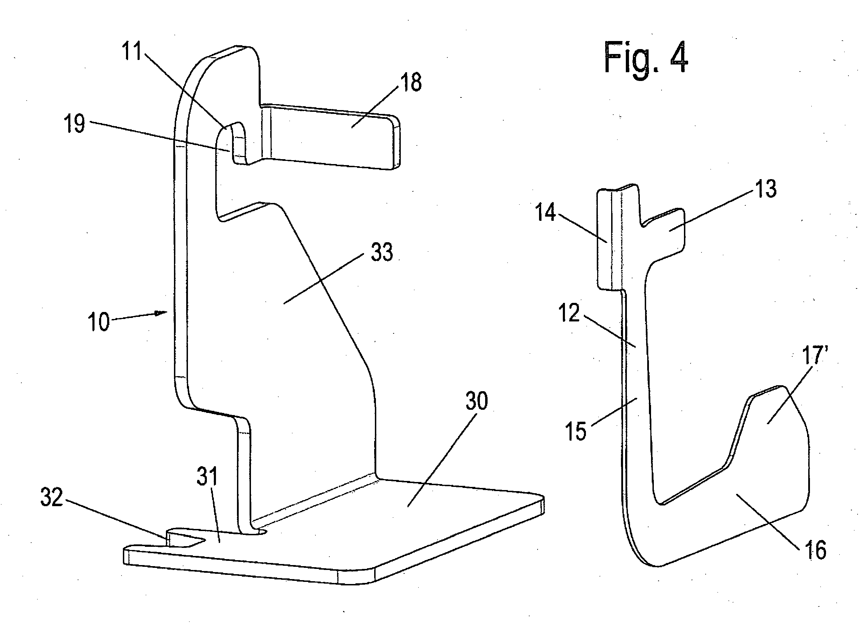

In Figur 4 sind der Halter 10 und das Federelement 12 in Detail gezeigt. Der Halter 10 ist als Winkel ausgebildet und umfasst einen horizontalen abgewinkelten Abschnitt 30 sowie einen vertikalen Winkelabschnitt 33. An dem vertikalen Winkelabschnitt 33 ist der Haken 11 mit einer Öffnung 19 zum Einfügen des abgewinkelten Endabschnittes 4 ausgebildet. Der Halter 10 ist aus einem gebogenen und gestanzten Metallblech hergestellt.

Auch das Federelement 12 ist im Wesentlichen plattenförmig aus einem Metallblech hergestellt und besitzt eine im Wesentlichen L-förmige Kontur. Der Federschenkel 12 umfasst dabei endseitig den abgewinkelten Anschlag 14 und den Vorsprung 13. Auf der zur Biegeachse gewandten Seite ist der Bodenabschnitt 16 mit dem hier modifiziert ausgebildeten Ausleger 17' angeordnet, der an dem vertikalen Abschnitt 33 verklebt oder verschweißt sein kann. Das Federelement 12 ist als Blattfeder ausgebildet, wobei statt des flachen plattenförmigen Aufbaus auch ein Federelement 12 aus einem Runddraht oder einer anderen Geometrie eingesetzt werden kann.

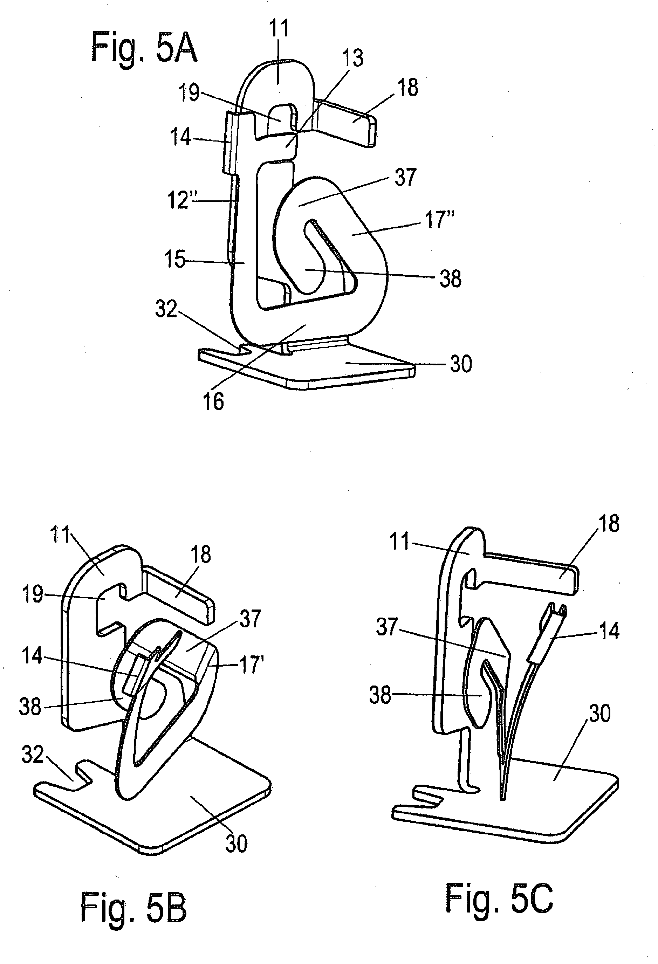

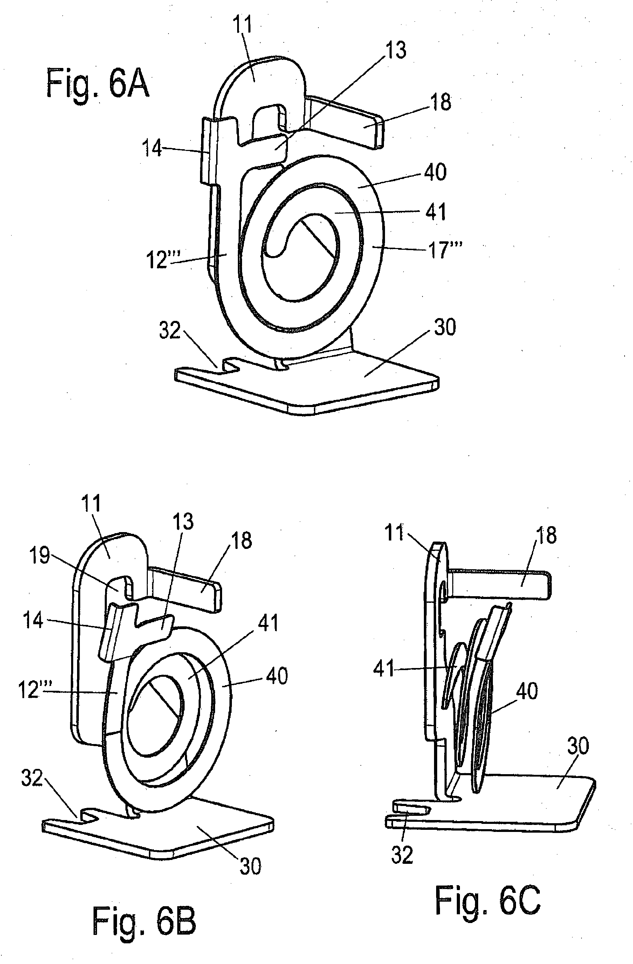

In den Figuren 5 und 6 sind bei dem zuvor beschriebenem Halter 10 modifizierte Federelemente 12" und 12"' vorgesehen.

Bei den in Figuren 5A bis 5C ist ein Federelement 12" vorgesehen, das zum Verschließen der Öffnung 19 einen Vorsprung 13 benachbart zu einem Anschlag 14 aufweist. Das Federelement 12" ist im Wesentlichen streifenförmig und flach ausgebildet und umfasst einen Bodenabschnitt 16, der benachbart zu dem abgewinkelten Abschnitt 30 des Halters 10 angeordnet ist. Von dem Bodenabschnitt 16 erstreckt sich nach einem bogenförmig ausgesparten Übergangsbereich ein Federschenkel 17", der nach einem bogenförmig ausgesparten Übergangsbereich einen Abschnitt 37 der nach einem bogenförmig ausgesparten Übergangsbereich ein Ende 38 aufweist. Dadurch kann das Federelement 12" nach Art einer Blattfeder gespannt sein, wobei das Federelement 12" durch den gewickelten Abschnitt 37 vergleichsweise lang ist, sodass in besonders kompakter Bauweise eine Federkraft bereit gestellt werden kann. Die durch die Übergangsbereiche erlangte große federnde Länge erlaubt den Einsatz von kostengünstigen Werkstoffen mit kleineren Elastizitätsbereich.

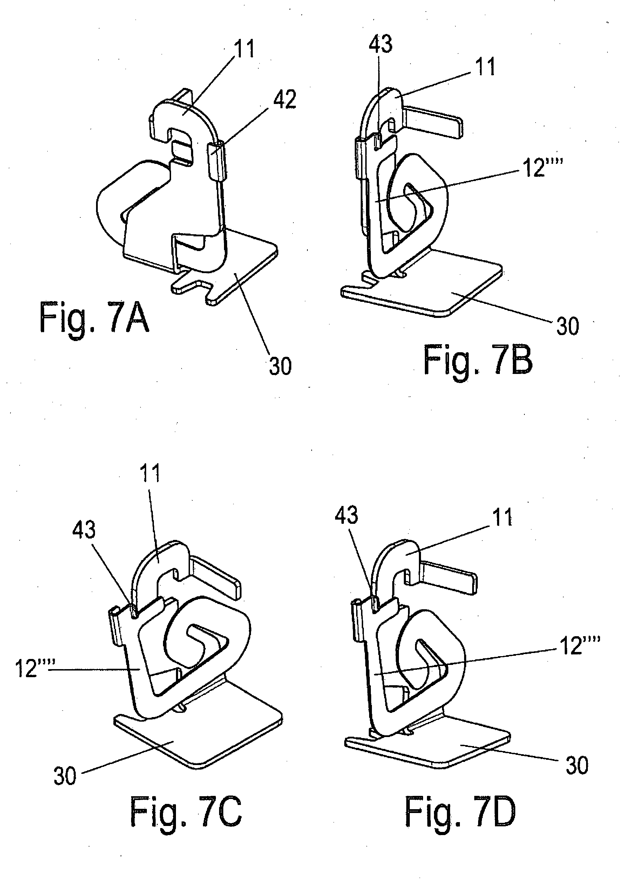

Bei den in Figuren 6A bis 6C gezeigten Ausführungsbeispielen ist ein Federelement 12"' vorgesehen, das im Bereich des Hakens 11, wie die vorangegangenen Ausführungsbeispiele, einen Anschlag 14 sowie einen Vorsprung 13 aufweist. Das Federelement 12"' umfasst einen Federschenkel 17"', der sich ausgehend von dem abgewinkelten Abschnitt 30 des Halters 10 eine äußere spiralförmige Wicklung 40 und eine innere spiralförmige Wicklung 41 umfasst. Durch die spiralförmigen Wicklungen 40 und 41 wird ein besonders langer Federschenkel 15 bei kompakter Bauweise bereitgestellt, der auch als seitliche Abstützfläche dienen kann. Die Spitze der inneren Wicklung 41 kann dabei an dem vertikalen Abschnitt 33 des Halters 10 verschweißt oder verklebt sein. Bei dem in den Figuren 7A bis 7G gezeigten Ausführungsbeispiel ist ein Federelement 12"" in Form einer Flachformfeder vorgesehen, das eine Abwandlung zu dem in Figur 5 gezeigten Ausführungsbeispiel darstellt. Das Federelement 12"" umfasst einen Abschnitt 42 zur Sicherung der Flachformfeder gegen ungewolltes Lösen. Der Abschnitt 42 besitzt hierfür einen u-förmigen Querschnitt und umgreift eine Kante an dem Haken 11. Zum Lösen weist das Federelement 12"" eine Handhabe 43 in Form eines Vorsprunges auf. Zum Lösen muss der Anwender das Federelement 12"" in Richtung weg von dem Haken 11 auslenken, so dass der Abschnitt 42 außer Eingriff mit dem Haken 11 gelangt, bevor er das Federelement 12"" quer zu seiner Hauptebene auslenken kann, um die Verbindung zu lösen.

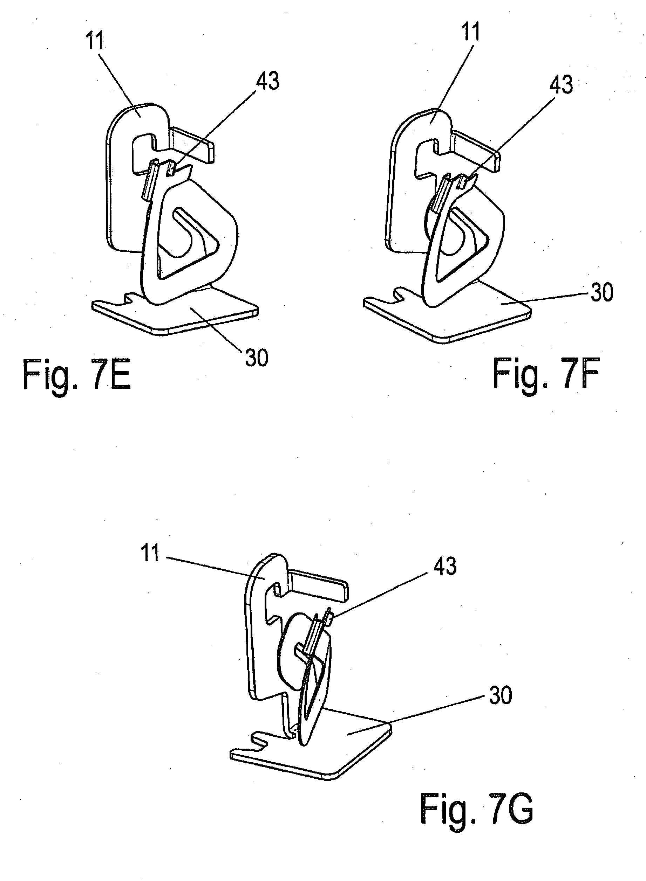

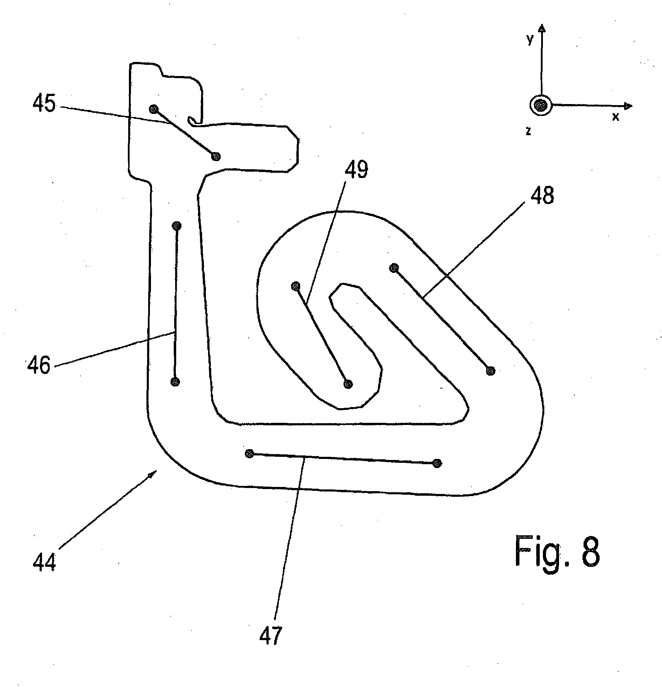

Die Figur 8 zeigt schematisch die Charakteristik einer Flachformfeder 44 entsprechend der Figuren 5 und 7. Die Flachformfeder 44 ist an einer Fixierung 49 am dem vertikalen Winkelabschnitt 33 des Halters 10 verschweißt. In diesem Bereich tritt keine Verformung in Form von Biegung auf. An dem diagonalen Federabschnitt entsteht eine starke Biegung 48 in Richtung der negativen z-Achse. Am vertikalen Federabschnitt unterhalb eines Kraftangriffes 45 stellt sich ebenfalls eine starke Biegung 46 in Form einer Auslenkung ein. Die Kraft wirkt in z-Richtung auf die Feder und bewirkt gleichachsige Verformung. Der horizontale Schenkel der Flachformfeder zeigt, über seine gesamte Länge, nur eine leichte Biegung 47. Die Richtung der Auslenkung wird von dem vertikalen und diagonalen Federabschnitten bestimmt und wandert somit von positiver z-Achse in die Negative über. Nahezu keine Verformung tritt an dem Kraftangriffspunkt 45 auf. Dies liegt an der Abkantungen durch den Anschlag 14 bzw. des Abschnittes 42 und der damit einhergehenden Steifigkeit. An den durch Radien bestimmten Flächen ist ebenfalls nur eine schwache Biegung vorhanden. Der Federweg wird maßgeblich durch die länglichen, geraden Federabschnitte erreicht. Die gebogenen Übergänge versteifen die Flachformfeder und nehmen lediglich auf die Richtung der Auslenkung Einfluss.

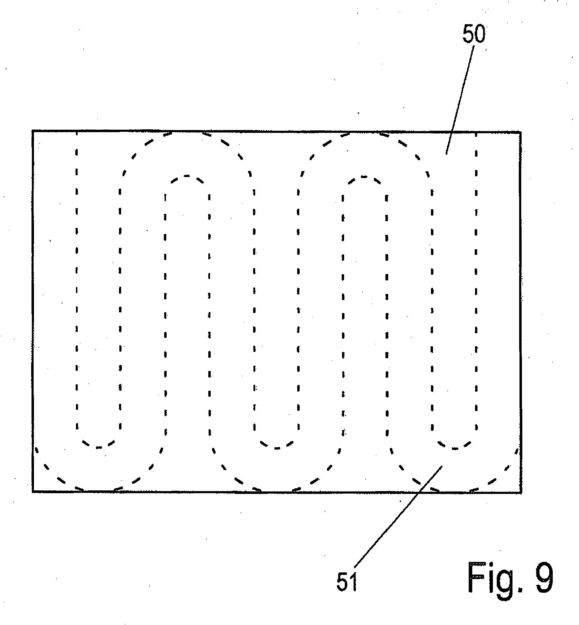

Die Figur 9 zeigt ein Beispiel für einen modifizierten Flachformfederzuschnitt 51. Aus einer plattenförmigen rechteckigen Grundfläche 50 des Flachmaterials wird eine mäanderförmig ausgebildeter Flachformfederzuschnitt 51 gewonnen. Somit wird eine Flachformfeder mit einer großen Auslenkung quer zur Materialstärke bei geringem Materialeinsatz erzeugt. Die Flachformfeder kann im Übrigen wie die vorangegangenen Ausführungsbeispiele ausgebildet sein.

### Bezugszeichenliste

- 1: Seitengitter
- 2: Pfosten
- 3: Strebe
- 4: Endabschnitt
- 5: Auszugsführung
- 6: Führungsschiene
- 7: Laufschiene
- 10: Halter
- 11: Haken
- 12: Federelement
- 12": Federelement
- 12"': Federelement
- 12"": Federelement
- 13: Vorsprung
- 14: Anschlag
- 15: Federschenkel
- 16: Bodenabschnitt
- 17: Ausleger
- 17': Ausleger
- 17": Federschenkel
- 17"': Federschenkel
- 18: Anschlag
- 19: Öffnung
- 20: Halter
- 21: Haken
- 22: Abschnitt
- 23: Nut
- 24: Öffnung
- 25: Leiste
- 26: Ausleger
- 30: Abschnitt
- 31: Lasche
- 32: Aussparung
- 33: Winkelabschnitt
- 37: Abschnitt
- 38: Ende
- 40: Wicklung
- 41: Wicklung
- 42: Abschnitt
- 43: Handhabe
- 44: Flachformfeder
- 45: Kraftangriff
- 46: starke Biegung
- 47: leichte Biegung
- 48: starke Biegung
- 49: Fixierung
- 50: Grundfläche
- 51: Flachformfederzuschnitt

## Patentansprüche

1. Verbindungseinrichtung und Seitengitter (1) zur Fixierung einer Auszugsführung (5) an dem Seitengitter (1), insbesondere für Backöfen, mit einem Halter (10), der mindestens einen Haken (11) zum Einhängen an einer horizontalen Strebe (3) des Seitengitters (1) aufweist, und einem Federelement (12, 12", 12"', 12""), mittels dem der Halter (10) an dem Seitengitter (1) verrastbar ist, wobei das Federelement (12, 12", 12"', 12"") als separates Bauteil ausgebildet ist und einen biegbaren Federschenkel (15) zum Verrasten des Halters (10) aufweist, **dadurch gekennzeichnet, dass** das Federelement (12, 12", 12"') im Wesentlichen L-förmig ausgebildet ist,
wobei ein Schenkel den Federschenkel (15) bildet, welcher an einem Winkelabschnitt (33) des Halters (10) anliegt, und der andere Schenkel (16) an einem gegenüber dem Winkelabschnitt (33) abgewinkelten Abschnitt (30) des Halters (10) abgestützt ist oder das Federelement (12", 12"', 12"") einen spiralförmigen Zuschnitt aus einer Flachformfeder aufweist.

2. Verbindungseinrichtung und Seitengitter nach Anspruch 1, **dadurch gekennzeichnet,**
**dass** das Federelement (12, 12", 12"', 12"") an dem Halter (10) in der verrasteten Position fixiert ist.

3. Verbindungseinrichtung und Seitengitter nach Anspruch 1 oder 2, **dadurch gekennzeichnet, dass** der Halter (10) als Winkel ausgebildet ist, der an einer Seite den Haken (11) und an einem abgewinkelten Abschnitt (30) eine Auflage für die Auszugsführung (5) ausbildet.

4. Verbindungseinrichtung und Seitengitter nach Anspruch 1, **dadurch gekennzeichnet,**
**dass** an dem abgewinkelten Abschnitt (30) eine Aussparung (32) ausgebildet ist, in die ein vertikaler Pfosten (2) des Seitengitters (1) einfügbar ist.

5. Verbindungseinrichtung und Seitengitter nach einem der vorhergehenden Ansprüche,
**dadurch gekennzeichnet, dass** das Federelement (12, 12", 12"') als Blattfeder ausgebildet ist.

6. Verbindungseinrichtung und Seitengitter nach einem der vorhergehenden Ansprüche,
**dadurch gekennzeichnet, dass** der biegbare Federschenkel (15) eine Länge von mindestens 2 cm aufweist.

7. Verbindungseinrichtung und Seitengitter nach einem der vorhergehenden Ansprüche,
**dadurch gekennzeichnet, dass** ein zweiter Halter (20) vorgesehen ist,
der einen Haken (21) zum Einhängen an einer horizontalen Strebe (3) des Seitengitters (1) aufweist.

8. Verbindungseinrichtung und Seitengitter nach Anspruch 7, **dadurch gekennzeichnet,**
**dass** der zweite Halter (20) einen leistenförmigen Abschnitt aufweist, an dem eine Nut (23) zum Einfügen eines vertikalen Pfostens (2) des Seitengitters (1) ausgebildet ist.

9. Verbindungseinrichtung und Seitengitter nach Anspruch 7 oder 8, **dadurch gekennzeichnet, dass** an dem zweiten Halter (20) ein horizontaler Ausleger (26) vorgesehen ist, an dem eine Schiene (6) der Auszugsführung (5) festgelegt ist.

10. Verbindungseinrichtung und Seitengitter nach Anspruch 9, **dadurch gekennzeichnet,**
**dass** der Ausleger (26) in die Schiene (6) einsteckbar ist.

11. Verbindungseinrichtung und Seitengitter nach einem der vorhergehenden Ansprüche,
**dadurch gekennzeichnet, dass** das Federelement (12", 12"') einem in sich gewickelten, insbesondere spiralförmig gewickelten Federschenkel (17", 17"') aufweist.

12. Verbindungseinrichtung und Seitengitter nach einem der vorhergehenden Ansprüche,
**dadurch gekennzeichnet, dass** der erste Halter (10), der zweite Halter (20) und/oder das Federelement (12, 12", 12"', 12"") aus einem Metallblech hergestellt sind.

13. Auszugsführung mit einer Verbindungseinrichtung mit Seitengitter nach mindestens einem der Ansprüche 1 bis 12.

## Claims

1. Connecting device and side grate (1) for fixing a pull-out guide (5) to the side grate (1), in particular for baking ovens, with a holder (10) which has at least one hook (11) for hooking onto a horizontal strut (3) of the side grate (1), and with a spring element (12, 12", 12"', 12"") by means of which the holder (10) can be latched to the side grate (1), wherein the spring element (12, 12", 12"', 12"") is designed as a separate component and has a bendable spring leg (15) for latching the holder (10), **characterized in that** the spring element 12, 12", 12"') is substantially L-shaped, wherein one leg forms the spring leg (15), which bears against an angular portion (33) of the holder (10), and the other leg (16) is supported on a portion (30) of the holder (10) that is angled off with respect to the angular portion (33), or the spring element (12", 12"', 12"") comprises a spiral blank composed of a flat spring.

2. Connecting device and side grate according to Claim 1, **characterized in that** the spring element (12, 12", 12"', 12"") is fixed to the holder (10) in the latched position.

3. Connecting device and side grate according to Claim 1 or 2, **characterized in that** the holder (10) takes the form of an angle bracket which forms the hook (11) on one side and forms a support for the pull-out guide (5) on an angled-off portion (30).

4. Connecting device and side grate according to Claim 1, **characterized in that** a cutout (32) into which a vertical post (2) of the side grate (1) can be inserted is formed in the angled-off portion (30).

5. Connecting device and side grate according to one of the preceding claims, **characterized in that** the spring element (12, 12", 12"') takes the form of a leaf spring.

6. Connecting device and side grate according to one of the preceding claims, **characterized in that** the bendable spring leg (15) has a length of at least 2 cm.

7. Connecting device and side grate according to one of the preceding claims, **characterized in that** a second holder (20) is provided which has a hook (21) for hooking onto a horizontal strut (3) of the side grate (1).

8. Connecting device and side grate according to Claim 7, **characterized in that** the second holder (20) has a strip-like portion in which a groove (23) for inserting a vertical post (2) of the side grate (1) is formed.

9. Connecting device and side grate according to Claim 7 or 8, **characterized in that** a horizontal extension arm (26) on which a rail (6) of the pull-out guide (5) is secured is provided on the second holder (20).

10. Connecting device and side grate according to Claim 9, **characterized in that** the extension arm (26) can be inserted into the rail (6).

11. Connecting device and side grate according to one of the preceding claims, **characterized in that** the spring element (12", 12"') has a spring leg (17", 17"') which is wound in on itself and is in particular wound in a spiral shape.

12. Connecting device and side grate according to one of the preceding claims, **characterized in that** the first holder (10), the second holder (20) and/or the spring element (12, 12", 12"', 12"") are produced from a metal sheet.

13. Pull-out guide with a connecting device with side grate according to at least one of Claims 1 to 12.

## Revendications

1. Installation de liaison et grille latérale (1) pour fixer un guide d'extraction (5) à la grille latérale (1), notamment pour des fours de cuisson, comportant :
- un support (10) ayant au moins un crochet (11) pour s'accrocher à une entretoise horizontale (3) de la grille latérale (1) ainsi qu'un élément de ressort (12, 12", 12"', 12"") par lequel le support (10) s'accroche à la grille latérale (1),
- l'élément de ressort (12, 12", 12"', 12"") étant une pièce distincte et comportant une branche élastique (15), flexible, pour accrocher le support (10),
installation **caractérisée en ce que**
l'élément de ressort (12, 12", 12"') a pratiquement une forme de L dont une branche forme la branche élastique (15) qui s'applique contre un segment de dièdre (33) du support (10) et l'autre branche (16) s'appuie contre le segment de dièdre (30) du support (10) replié par rapport au segment de dièdre (33) opposé, ou l'élément de ressort (12", 12"', 12"") est une pièce découpée en spirale dans un ressort de forme plate.

2. Installation de liaison et grille latérale selon la revendication 1,
**caractérisées en ce que**
l'élément de ressort (12, 12", 12"', 12"") est fixé dans sa position accrochée au support (10).

3. Installation de liaison et grille latérale selon la revendication 1 ou 2,
**caractérisées en ce que**
le support (10) est sous la forme d'un dièdre comportant sur un côté le crochet (11) et sur le segment replié (30), un appui pour le guidage d'extraction (5).

4. Installation de liaison et grille latérale selon la revendication 1,
**caractérisées en ce que**
le segment replié (30) un évidement (32) qui reçoit un montant vertical (2) de la grille latérale (1).

5. Installation de liaison et grille latérale selon l'une des revendications précédentes,
**caractérisées en ce que**
l'élément de ressort (12, 12", 12"') est un ressort-lame.

6. Installation de liaison et grille latérale selon l'une des revendications précédentes,
**caractérisées en ce que**
la branche élastique, flexible (15) a une longueur d'au moins 2 cm.

7. Installation de liaison et grille latérale selon l'une des revendications précédentes,
**caractérisées par**
un second support (20) ayant un crochet (21) pour s'accrocher par une entretoise horizontale (3) de la grille latérale (1).

8. Installation de liaison et grille latérale selon la revendication 7,
**caractérisées en ce que**
le second support (20) a un segment en forme de longeron muni d'une rainure (23) pour insérer un montant vertical (2) de la grille latérale (1).

9. Installation de liaison et grille latérale selon la revendication 7 ou 8,
**caractérisées en ce que**
le second support (20) comporte un bras horizontal (26) dans lequel se fixe un rail (6) du guidage d'extraction (5).

10. Installation de liaison et grille latérale selon la revendication 9,
**caractérisées en ce que**
le bras (26) s'emmanche dans le rail (6).

11. Installation de liaison et grille latérale selon l'une des revendications précédentes,
**caractérisées en ce que**
l'élément de ressort (12", 12"') comporte une branche élastique (17", 17"') enroulée sur elle-même, notamment suivant une forme en spirale.

12. Installation de liaison et grille latérale selon l'une des revendications précédentes,
**caractérisées en ce que**
le premier support (10), le second support (20) et/ou l'élément de ressort (12, 12", 12"', 12"") est fabriqué dans une tôle métallique.

13. Guide d'extraction comportant une installation de liaison munie d'une grille latérale selon au moins l'une des revendications 1 à 12.
